# EUROPEAN PATENT APPLICATION

(11) **EP 4 567 061 A1**
(43) Date of publication of application: **11.06.2025**
(21) Application number: 24216073.7
(22) Date of filing: 28.11.2024
(51) Int. Cl.: C08K 9/06, B60C 1/00, C08K 3/36, C08K 5/06, C08K 5/54, C08K 5/5425, C08K 5/544, C08K 5/548

(54) **FUNCTIONALIZED SILICA AND RUBBER ARTICLES COMPRISING THE SAME**

(30) Priority: 08.12.2023 US 202318533344
(71) Applicant: The Goodyear Tire & Rubber Company, Akron, OH 44316 (US)
(72) Inventor: HAHN, Bruce Raymond, Hudson, 44210 (US); PAPAKONSTANTOPOULOS, George Jim, Medina, 44256 (US); HUA, Kuo-Chih, Richfield, Ohio, 44286 (US); XUE, Sky Tianxiang, Shanghai, 200031 (CN)
(74) Representative: Kutsch, Bernd

(57) **Abstract**

The disclosure relates to an uncured rubber composition comprising a rubber and a functionalized silica, wherein the functionalized silica comprises a plurality of silica particles, a coupling agent, and an alcohol ether having the Formula:

CH₃-(CH₂)ₙ-(O-(CH₂)ₓ)ₘ-OH

wherein n is an integer from 1 to 18; wherein x is an integer from 1 to 8; and wherein m is an integer from 1 to 15. Also disclosed are methods of making the rubber compositions, articles such as tires made from the same, and the functionalized silica used to produce the same. The uncured rubber compositions can be or include a masterbatch. In an aspect, the coupling agent aids in the dispersal of the functionalized silica in the rubber, allowing for mixing under conditions that are not harsh, while retaining desirable properties in the final rubber products.

## Description

### BACKGROUND

Rubber compositions useful in tires and other articles typically contain a filler material such as carbon black. Alternative filler materials such as, for example, silica, can offer a desirable combination of properties, including improved hysteresis for better fuel economy and durability, along with better wet traction. However, incorporating silica into rubber compositions for use in truck tires can be difficult due to chemical incompatibilities requiring high shear processing steps which have the detrimental effect of breaking down the natural rubber. It would thus be desirable to develop a natural rubber composite with a functionalized silica filler material that is simple to disperse in rubber compositions.

Rubber compositions are typically mixed in two stages, a non-productive stage followed by a final productive mixing stage. In the productive stage, sulfur-vulcanizing agents and other curatives are added; the productive stage is often conducted at a lower temperature than the non-productive stage. Heat applied during the non-productive stage can be detrimental to certain rubbers, including natural rubbers. Reducing processing time and energy input can result in valuable cost savings during rubber production. It would therefore be desirable to consolidate rubber mixing into fewer steps conducted at lower temperatures.

Despite advances in production of rubber compositions for tires and other articles, there is still a scarcity of methods for producing rubber that effectively incorporate filler materials such as silica while reducing processing temperatures as well as the number of steps required for mixing while also being effective in improving performance-related properties of articles made therefrom, such as wet traction and abrasion loss with respect to tires and/or tire treads. These needs and other needs are satisfied by the present disclosure.

### SUMMARY OF THE INVENTION

The invention relates to the uncured rubber composition of claim 1, to the cured rubber composition of claim 9, to the article of claim 10, and to the functionalized silica of claim 12.

In one aspect, the invention relates to an uncured rubber composition comprising a rubber and a functionalized silica, wherein the functionalized silica comprises a plurality of silica particles, a coupling agent, and an alcohol ether having the Formula I:

CH₃-(CH₂)ₙ-(O-(CH₂)ₓ)ₘ-OH Formula I

wherein n is an integer from 1 to 18; wherein x is an integer from 1 to 8; and wherein m is an integer from 1 to 15.

Also disclosed are methods of making the rubber compositions, articles such as tires made from the same, and the functionalized silica used to produce the same. The uncured rubber compositions can be or include a masterbatch. In an aspect, the coupling agent aids in the dispersal of the functionalized silica in the rubber, allowing for mixing under conditions that are not harsh, while retaining desirable properties in the final rubber products.

Other systems, methods, features, and advantages of the present disclosure will be or become apparent to one with skill in the art upon examination of the following drawings and detailed description. It is intended that all such additional systems, methods, features, and advantages be included within this description, be within the scope of the present disclosure, and be protected by the accompanying claims. In addition, all optional and preferred features and modifications of the described embodiments are usable in all aspects of the disclosure taught herein. Furthermore, the individual features of the dependent claims, as well as all optional and preferred features and modifications of the described embodiments are combinable and interchangeable with one another.

### DETAILED DESCRIPTION OF PREFERRED EMBODIMENTS

Prior to describing the various aspects of the present disclosure, the following definitions are provided and should be used unless otherwise indicated. Additional terms may be defined elsewhere in the present disclosure.

### Definitions

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of," "including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

As used herein, the terms "optional" or "optionally" means that the subsequently described event or circumstance can or cannot occur, and that the description includes instances where said event or circumstance occurs and instances where it does not.

As used herein, the term "phr" as used herein, and according to conventional practice, refers to "parts by weight of a respective material per 100 parts by weight of rubber or elastomer". In general, using this convention, a rubber or elastomer composition is comprised of 100 parts by weight of rubber/elastomer. The claimed composition may comprise other rubbers/elastomers than explicitly mentioned in the claims, provided that the phr value of the claimed rubbers/elastomers is in accordance with claimed phr ranges and the amount of all rubbers/elastomers in the composition results in total in 100 parts of rubber. For example, the composition may further comprise from 1 phr to 10 phr, optionally from 1 phr to 5 phr, of one or more additional diene-based rubbers, such as SBR, SSBR, ESBR, PBD/BR, NR and/or synthetic polyisoprene. In another example, the composition may include less than 5, preferably less than 3, phr of an additional diene-based rubber or be also essentially free of such an additional diene-based rubber. he terms "rubber" and "elastomer" may also be used herein interchangeably, unless indicated otherwise.

As used herein, the term "uncured rubber composition" refers to a composition including at least one natural or synthetic rubber component and, optionally, one or more fillers, processing aids, or additional compounds, that has not been vulcanized. Uncured rubber is sensitive to changes in temperature and has a tendency to undergo "cold flow" (slow movement or deformation under stress) over time. In some aspects, the uncured rubber composition is a masterbatch.

As used herein, the term "cured rubber composition" refers to a rubber composition obtained by taking an uncured rubber composition and curing or vulcanizing it, often accomplished using sulfur compounds and/or other curing additives and in the presence of heat. Vulcanized or cured rubber does not undergo cold flow and is less sensitive to changes in temperature relative to uncured rubber. In another aspect, rubber compositions can be cured in molds in order to form finished articles including, but not limited to, tires.

Unless otherwise specified, temperatures referred to herein are based on atmospheric pressure (i.e. one atmosphere).

### Rubber

In some preferred aspects, the disclosed rubber compositions include a solution polymerized styrene-butadiene rubber (SBR). In one aspect, the solution polymerization prepared SBR (sSBR) can have a bound styrene content in the range of from 5 percent to 50 percent, or from 9 percent to 26 percent. In a further aspect, the sSBR can be conveniently prepared by organolithium catalysis in the presence of a hydrocarbon solvent.

In another preferred aspect, an emulsion polymerized styrene/butadiene (eSBR) can be used, wherein the eSBR has a styrene content of from 5 percent to 50 percent, or from 8 to 28 percent bound styrene. In a further aspect, by eSBR, it is meant that styrene and 1,3-butadiene are copolymerized as an aqueous emulsion.

In one preferred aspect, the disclosed rubber compositions include a polybutadiene such as, for example, cis 1,4-polybutadiene. In a further aspect, the polybutadiene can be prepared, for example, by organic solution polymerization of 1,3-butadiene. The polybutadiene can be characterized, for example, by having at least a 90 percent cis 1,4-content, at least 95 percent cis 1,4-content, or at least 99 percent cis 1,4-content. In other aspects, 10 percent or less, or 5 percent or less, or 1 percent or less of the polybutadiene can have a trans 1-4 content, or can be a 1,2-addition product, or a combination thereof.

In one embodiment, natural rubber or synthetic cis-1,4 polyisoprene can be used.

A reference to glass transition temperature, or T_{g}, of an elastomer or elastomer composition, when used herein, represents the glass transition temperature(s) of the respective elastomer or elastomer composition in its uncured state or, in the case of an elastomer composition, in some aspects, T_{g} can be measured in a cured state.

T_{g} is determined as a peak midpoint by a differential scanning calorimeter (DSC) at a temperature rate of increase of 10° C per minute using ASTM D7426 or equivalent.

In one embodiment, the solution polymerized styrene-butadiene rubber has a glass transition temperature in a range of from -85 °C to 0 °C, or from -85 °C to -50 °C, or from -40 °C to 0° C. In a further aspect, the styrene butadiene rubber can include a blend of two or more styrene-butadiene rubber having different T_{g}. In a further aspect, such a blend of styrene-butadiene rubbers can include functionalized SBRs, non-functionalized SBRs, or a combination of functionalized and non-functionalized styrene-butadiene rubbers.

### Functionalized Silica and Preparation Thereof

Precipitated silica is generally hydrophilic in nature and therefore has a greater affinity to itself, with less affinity to a diene-based elastomer in a rubber composition, which makes it difficult to obtain a satisfactory dispersion of the precipitated silica throughout the rubber composition. The functionalized silica described herein addresses this need.

In one aspect, an untreated silica is used to produce the functionalized silica described herein. In a further aspect, the untreated silica can be a prewashed, wet filter cake of precipitated silica having hydroxyl groups thereon. In a further aspect, the precipitated silica can be derived from rice husk ash or bagasse (sugar cane) ash, or the like, and need not be dried following washing and filtration of an acid-treated sodium silicate.

In one aspect, the untreated silica can have a particle size of less than 10 micrometers (µm), or less than 5 µm, or less than 0.1 µm, as determined by ASTM C721-20, "Standard Test Methods for Estimating Average Particle Size of Alumina and Silica Powders by Air Permeability." (Silica primary particles for rubber usage are usually in the 10 to 100 nanometer range, 0.01 to 0.1 micrometers) as measured by Differential Centrifugal Sedimentation (DCS).

Exemplary untreated precipitated silicas are available from PPG Industries as Hi-Sil^{™}, e.g., under the designations 210, 243, 315, EZ 160G-D, EZ 150G, 190G, 200G-D, HDP-320G, and 255CG-D; from Solvay as Zeosil^{™}, under the designations 115GR, 125GR, 165GR, 175GR, 185GR, 195GR, 1085GR, 1165MP, 1115MP, HRS 1200MP, Premium MP, Premium 200MP, and 195HR; from Evonik as Ultrasil^{™}, under the designations VN2, VN3, VN3GR, 5000GR, 7000GR, 9000GR, as Zeopol^{™}, under the designations 8755LS and 8745; from Wuxi Quechen Silicon Chemical Co., Ltd. as Newsil^{™}, under the designations 115GR and 2000MP; from Maruo Calcium Co., Ltd., as Tokusil^{™} 315, and silicas derived from rice husk ash from Yihai Food and Oil Industry, China. Any precipitated silica can be used in the method. In other embodiments, the untreated precipitated silica is prepared as a wet filtered material shortly before use.

In some aspects, the untreated silica is diluted in water (or other aqueous medium that is predominantly water) to form an aqueous slurry. In one embodiment, the slurry can contain from 5-30 wt % silica, or at least 10 wt % silica, or another suitable dilution that is able to be pumped through a spray dryer. In any of these aspects, the pH of the slurry can be adjusted, e.g., to a pH of from 6 to 7.

In one aspect, the alcohol ether used to produce the functionalized silica has the Formula I

CH₃-(CH₂)ₙ-(O-(CH₂)ₓ)ₘ-OH Formula I

wherein n is an integer from 1 to 18 (i.e., 1, 2, 3, 4, 5, 6, 7, 8, 9, 10, 11, 12, 13, 14, 15, 16, 17, or 18); wherein x is an integer from 1 to 8 (i.e., 1, 2, 3, 4, 5, 6, 7, or 8); and wherein m is an integer from 1 to 15 (i.e., 1, 2, 3, 4, 5, 6, 7, 8, 9, 10, 11, 12, 13, 14, or 15).

In one preferred aspect, x in Formula I is 2. In another aspect, x in Formula I is 2 and n is 12, 13, 14, or 15. In another aspect, x in Formula I is 2, n is 12, 13, 14, or 15, and m is 4, 5, or 6.

In one preferred aspect, the alcohol ether and coupling agent in the composition are at a weight ratio of 1:1 to 1:5, or 1:1, 1:1.5, 1:2, 1:2.5, 1:3, 1.3.5, 1:4, 1:4.5, or 1:5, where any value can be a lower and upper endpoint of a range (1:2 to 1:3). In another preferred aspect, the alcohol ether is from 1 part per hundred of the silica particles to 10 parts per hundred of the silica particles, or 1 part per hundred, 2 parts per hundred, 3 parts per hundred, 4 parts per hundred, 5 parts per hundred, 6 parts per hundred, 7 parts per hundred, 8 parts per hundred, 9 parts per hundred, or 10 parts per hundred, where any value can be a lower and upper endpoint of a range (2 parts per hundred to 6 parts per hundred).

In some preferred aspects, an organosilane coupling agent is used to produce the functionalized silica described herein. In one aspect, the organosilane coupling agent used can include a first reactive moiety which includes a silicon atom and at least one hydrolyzable group, and a second reactive moiety capable of reaction with a double bond of a vulcanizable elastomer, the first and second reactive moieties being connected by a bridging unit comprising at least one of a polysulfide and a hydrocarbylene group. Further in this aspect, at least one of the hydrolyzable groups of the first reactive moiety can be selected from an alkoxy group and an aminoalkyl group. In some aspects, the coupling agent can be selected from bis(trialkoxysilylalkyl) polysulfides, bis(alkoxyaryloxysilylalkyl) polysulfides, bis(triaryloxysilyl-alkyl) polysulfides, and mixtures thereof.

The coupling agent is soluble in water and is able to bond with hydroxyl groups on the surface of the silica particles and with a polymer having one or more double bonds (e.g., C=C bonds), in particular, a diene-based elastomer.

In one embodiment, the coupling agent is a bifunctional organosilane coupling agent. Example organosilane coupling agents have first and second reactive moieties, which are connected by a bridging unit, such as a polysulfide and/or a hydrocarbylene bridge. The first of the reactive moieties includes a silicon atom and a readily hydrolyzable group, such as an alkoxy group, or a halogen such as chlorine attached to the silicon atom. The hydrolyzable group is capable of being hydrolyzed and, in the hydrolyzed form, to form a covalent bond with a silica particle. The second reactive moiety is capable of forming a bond with the polymer than includes one or more double bonds (e.g., C=C bonds), such as a diene-based elastomer, to form a covalent bond between the coupling agent and the polymer, e.g., via an elimination reaction. The second reactive moiety may be the same as the first reactive moiety, e.g., includes a silicon atom with an alkoxy group, or a halogen such as chlorine attached to the silicon atom, or may be a different moiety.

An illustrative coupling agent includes one or more alkoxy groups, such as a methoxy group or an ethoxy group (or groups), bonded directly to a silicon atom. In such coupling agents the alkoxy group hydrolyzes in the presence of moisture typically found on the surface of the silica to form the corresponding silanol which reacts with or condenses in the presence of the silica surface to bond the silicon atom to the silica surface. An organic group or groups attached to the silicon atom is/are thus available for chemical reaction with the polymer matrix during vulcanization. As a result, the polymer matrix may become chemically bonded to the silica particle, by means of the coupling agent, e.g., during cure or vulcanization of the polymer.

In one preferred aspect, an example organosilane coupling agent can be of the general form: 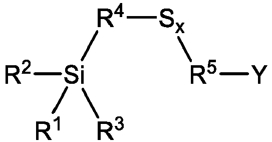 where at least one of R¹, R², and R³ is a hydrolyzable group, such as an alkoxy group, while the others of R¹, R², and R³ can also be hydrolyzable groups or unreactive groups, such as hydrogen; R⁴ and R⁵ are independently a hydrocarbylene group or a bond (i.e., are absent); x is the number of connected sulfur atoms in the sulfur bridge and is an integer from 0-12 (i.e., 0, 1, 2, 3, 4, 5, 6, 7, 8, 9, 10, 11, or 12), such as 1-8; Y is selected from an alkoxysilane (e.g., analogous to SiR¹(R²)(R³)), an alkylsilane, CN, a vinyl, an amine, an alkylthiol, an alkylamine, a methacrylate, a nitroso, a halogen group, and mixtures thereof.

In one embodiment, at least one of R⁴ and R⁵ is a hydrocarbylene group and/or x is greater than 0. Further in this aspect, a "hydrocarbylene group" is composed of carbon and hydrogen and may be aliphatic, aromatic, or a combination thereof. The hydrocarbylene group can be branched or unbranched.

Examples of suitable sulfur containing organosilanes that can be used as the coupling agent include: bis(trialkoxysilylalkyl) polysulfides, bis(alkoxyaryloxysilylalkyl) polysulfides and bis(triaryloxysilylalkyl) polysulfides, wherein the coupling agent includes a sulfur bridge of at least two sulfur atoms, or up to ten sulfur atoms, or up to eight sulfur atoms, where each alkoxy group, where present, includes from one to eighteen carbon atoms (e.g., methoxy, ethoxy, propoxy, butoxy); the aryloxy group, where present, includes from six to twelve carbon atoms and the alkyl group includes at least two carbon atoms, such as ethyl or propyl.

Specific examples of such coupling agents include: 3,3'-bis(triethoxysilylpropyl) disulfide, 3,3'-bis(triethoxysilylpropyl) trisulfide, 3,3'-bis(triethoxysilylpropyl) tetrasulfide, 3,3'-bis(triethoxysilylpropyl) octasulfide, 3,3'-bis(trimethoxysilylpropyl) disulfide, 3,3'-bis(trimethoxysilylpropyl) tetrasulfide, 2,2'-bis(triethoxysilylethyl) tetrasulfide, 3,3'-bis(trimethoxysilylpropyl) trisulfide, 3,3'-bis(tributoxysilylpropyl) disulfide, 3,3'-bis(trimethoxysilylpropyl) hexasulfide, 3,3'-bis(trimethoxysilylpropyl) octasulfide, 3,3'-bis(trioctoxysilylpropyl) tetrasulfide, 3,3'-bis(trihexoxysilylpropyl) disulfide, 3,3'-bis(tri-2"-ethylhexoxysilylpropyl) trisulfide, 3,3'-bis(triisooctoxysilylpropyl) tetrasulfide, 3,3'-bis(tri-t-butoxysilylpropyl) disulfide, 2,2'-bis(methoxydiethoxysilylethyl) tetrasulfide, 2,2'-bis(tripropoxysilylethyl) pentasulfide, 3,3'-bis(tricyclohexoxysilylpropyl) tetrasulfide, 3,3'-bis(tricyclopentoxysilylpropyl) trisulfide, 2,2'-bis(tri-2"-methylcyclohexoxysilylethyl) tetrasulfide, bis(trimethoxysilylmethyl) tetrasulfide, 3-methoxy ethoxy propoxysilyl 3'-diethoxybutoxy-silylpropyl tetrasulfide, 2,2'-bis(dimethyl methoxysilylethyl) disulfide, 2,2'-bis(dimethylsecbutoxysilylethyl) trisulfide, 3,3'-bis(methylbutylethoxysilylpropyl) tetrasulfide, 3,3'-bis(di-t-butylmethoxysilylpropyl) tetrasulfide, 2,2'-bis(phenylmethylmethoxysilylethyl) trisulfide, 3,3'-bis(diphenylisopropoxysilylpropyl) tetrasulfide, 3,3'-bis(diphenylcyclohexoxysilylpropyl) disulfide, 3,3'-bis(dimethylethylmercaptosilylpropyl) tetrasulfide, 2,2'-bis(methyldimethoxysilylethyl) trisulfide, 2,2'-bis(methylethoxypropoxysilylethyl) tetrasulfide, 3,3'-bis(diethylmethoxysilylpropyl) tetrasulfide, 3,3'-bis(ethyldi-secbutoxysilylpropyl) disulfide, 3,3'-bis(propyldiethoxysilylpropyl) disulfide, 3,3'-bis(butyldimethoxysilylpropyl) trisulfide, 3,3'-bis(phenyldimethoxysilylpropyl) tetrasulfide, 3-phenylethoxybutoxysilyl 3'-trimethoxysilylpropyl tetrasulfide, 4,4'-bis(trimethoxysilylbutyl) tetrasulfide, 6,6'-bis(triethoxysilylhexyl) tetrasulfide, 12,12'-bis(triisopropoxysilyldodecyl) disulfide, 18,18'-bis(trimethoxysilyloctadecyl) tetrasulfide, 18,18'-bis(tripropoxysilyloctadecenyl) tetrasulfide, 4,4'-bis(trimethoxysilyl-buten-2-yl) tetrasulfide, 4,4'-bis(trimethoxysilylcyclohexylene) tetrasulfide, 5,5'-bis(dimethoxymethylsilylpentyl) trisulfide, 3,3'-bis(trimethoxysilyl-2-methylpropyl) tetrasulfide, 3,3'-bis(dimethoxyphenylsilyl-2-methylpropyl) disulfide, and mixtures thereof.

Bis(3-triethoxysilylpropyl)polysulfides with an average of 2-5 sulfur atoms are commercially available as Si 69^{™} from Evonik (with an average of 3.7 connected sulfur atoms in the sulfur bridge), and Si 266^{™} from Evonik (with an average of 2.15 connected sulfur atoms).

Other suitable organosilane coupling agents include vinyl triethoxysilane, allyltriethoxysilane, vinyl-tris-(beta-methoxyethoxy) silane, methacryloylpropyltrimethoxysilane, gamma-amino-propyltriethoxysilane, gamma-mercaptopropyltrimethoxysilane bis(2-triethoxysilyl-ethyl) tetrasulfide, bis(3-trimethoxysilylpropyl) tetrasulfide, bis(2-trimethoxysilyl-ethyl) tetrasulfide, 3-mercaptopropyl-triethoxy silane, 2-mercaptopropyl-trimethoxy silane, 2-mercaptopropyl-triethoxy silane, 3-nitropropyl-trimethoxysilane, 3-nitropropyl-triethoxysilane, 3-chloropropyl-trimethoxysilane, 3-chloropropyl-triethoxysilane, 2-chloropropyl-trimethoxysilane, 2-chloropropyl-triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N-dimethylthiocarbamoyl tetrasulfide, 3-trimethoxysilylpropyl-benzothiazole tetrasulfide, 3-triethoxysilylpropyl-benzothiazole tetrasulfide, 3-trimethoxysilylpropyl-methacrylate monosulfide, 3-trimethoxysilylpropyl-methacrylate monosulfide, and the like, and mixtures thereof. For example, 3-thiocyanatopropyl-triethoxy silane is commercially available as Si 264 from Sigma-Aldrich, and 3-mercaptopropyl-trimethoxy silane is available as Silquest^{™} A-189 from Momentive Performance Materials.

Other organosilane coupling agents include allyl silanes, such as allyltriethoxysilane, allyltrimethoxysilane, allyldimethylchlorosilane, allyltrichlorosilane, allylmethyldichlorosilane, diallylchloromethylsilane, diallyldichlorosilane, and triallylchlorosilane.

In one preferred aspect, an alcohol ether and a coupling agent are added to the slurry, either in sequence, or at the same time, and are mixed with the untreated silica to produce the functionalized silica. In one embodiment, at least part of the alcohol ether is added first, to aid in dispersion of the silica, followed by addition of the coupling agent. In a further aspect, this step can be carried out at room temperature (e.g., under 30 °C).

In some aspects, the temperature of the slurry is raised to (or maintained at) a temperature at which the coupling agent reacts with the hydrated surface of the silica, but which is below the boiling point of water, e.g., at least 20 °C, or at least 40 °C, or at least 60 °C, or up to 90 °C, or up to 95° C, such as between 80 and 85 °C. In a further aspect, the silica coupling agent is allowed to react with the silica for a time which is sufficient to allow completion of the reaction.

Preferably, the slurry is then dried, e.g., by spray drying, at a temperature above the boiling point of water, such as at least 130 °C or at least 150 °C. In one aspect, the dried product can be in the form of substantially spherical beads, granules, or a powder (all of which are generally referred to herein as particles).

In one aspect, the amount of the silane coupling agent used to form the pretreated silica can be at least 0.01 parts by weight per hundred parts by weight of filler ("phf," here, the untreated silica). In some embodiments, the amount of silica coupling agent may be at least 1 phf, or at least 2 phf, or at least 5 phf, or at least 8 phf, or at least 10 phf, or up to 50 phf, or up to 15 phf of the untreated precipitated silica. (2 to 15 PHF) In one aspect, a ratio, by weight, of the coupling agent to the alcohol ether may be at least 0.8:1 or at least 1:1, or at least 1.2:1 or up to 3:1. (.8 to 1 up to 10 to 1) In an aspect, since the coupling agent and alcohol ether are retained on the silica when the mixture is spray dried, the amount of each and the phf can readily be determined from the amounts of coupling agent and alcohol ether added to the slurry and the dry weight of the functionalized silica product.

In one aspect, the functionalized silica can have a CTAB surface area of at least 30 m²/g, or at least 50 m²/g, or at least 100 m²/g, or at least 200 m²/g, or up to 300 m²/g, or up to 400 m²/g, or up to 500 m²/g, as measured according to ASTM D6845-20. In one aspect, the untreated precipitated silica can have a pH of 6-8, resulting from residual sodium sulfate.

In another embodiment, the rubber compositions described herein include the functionalized silica in an amount of at least 5 phr, or at least 10 phr, or at least 20 phr, or at least 50 phr, or up to 150 phr, or up to 120 phr, or up to 110 phr, or up to 100 phr. Put another way, the pretreated silica can be at least 2 wt %, or at least 5 wt %, or at least 10 wt %, or at least 20 wt %, or up to 60 wt %, or up to 40 wt % of the fully-formulated rubber composition.

### Additional Components

In one aspect, reinforcing fillers, other than the carbon black and the silica, can be present in the rubber compositions described herein at no more than 10 phr. In a further aspect, the processing aid(s) used in forming the rubber composition may include at least one of a resin, a wax, and a liquid plasticizer. In an aspect, the cure package can include a sulfur-based vulcanizing agent and at least one of a cure accelerator, a cure activator, and a cure inhibitor. In another aspect, the cure package can include a peroxide-based vulcanizing agent.

In another aspect, the rubber composition can further include at least one of an antioxidant, an antidegradant, and an antiozonant. In some aspects, a tire and/or tire tread can be formed from the rubber composition.

In one aspect, the rubber composition includes 100 phr of vulcanizable elastomers; at least 5 phr of the pretreated silica; optionally, one or more other reinforcing fillers, one or more processing aids, and a sulfur-containing cure package.

In some aspects, the rubber composition can include up to 100 phr of a processing oil. In one embodiment, the amount of processing oil ranges from 1 phr to 40 phr. In an alternative embodiment, the rubber composition is devoid of processing oil. In a further aspect, processing oil can be included in the rubber composition as extending oil typically used to extend elastomers, or by addition of the oil directly during rubber compounding. In some aspects, the processing oil used can include both extending oil present in the elastomers and processing oil added during compounding. In a further aspect, suitable process oils include various oils as are known in the art, including aromatic, paraffinic, naphthenic, and low PCA oils, such as MES, TDAE, and heavy naphthenic oils, and vegetable oils such as sunflower, soybean, and safflower oils.

In one aspect, the rubber composition can include a low PCA oil. Suitable low PCA oils include, but are not limited to, mild extraction solvates (MES), treated distillate aromatic extracts (TDAE), and heavy naphthenic oils as known in the art. Generally, suitable low PCA oils include those having a glass transition temperature T_{g} in a range of from -20 °C to -80 °C. MES oils generally have a T_{g} in a range of from -57 °C to -63 °C. TDAE oils generally have a T_{g} in a range of from -44 °C to -50 °C. Heavy naphthenic oils generally have a T_{g} in a range of from -42 °C to -48 °C. A suitable measurement for T_{g} of TDAE oils is DSC according to ASTM E1356, or an equivalent.

In one aspect, suitable low PCA oils include those having a polycyclic aromatic content of less than 3 percent by weight as determined by the IP 346 method. Procedures for the IP346 method may be found in Standard Methods for Analysis and Testing of Petroleum and Related Products and British Standard 2000 Parts, 2003, 62nd edition, published by the Institute of Petroleum, United Kingdom.

Suitable TDAE oils are available as Tudalen SX500 from Klaus Dahleke KG, VivaTec 400 and VivaTec 500 from H&R Group, Enerthene 1849 from BP, and Extensoil 1996 from Repsol. The oils can be available as the oil alone or along with an elastomer in the form of an extended elastomer. Suitable vegetable oils include, for example, soybean oil, sunflower oil, and canola oil which are in the form of esters containing a certain degree of unsaturation.

In one aspect, the disclosed rubber composition can include from 50 phr to 150 phr of silica (i.e., untreated silica that does not include the functionalized silica as described herein). In some aspects, precipitated silicas are preferred such as, for example, those obtained by the acidification of a soluble silicate, e.g., sodium silicate. In one aspect, such conventional silicas might be characterized, for example, by having a BET surface area, as measured using nitrogen gas, preferably ranging from 40 square meters per gram to 600 square meters per gram, or from 50 square meters per gram to 300 square meters per gram. In another aspect, the conventional silica can also be typically characterized by having a dibutylphthalate (DBP) absorption value from 100 to 400, or from 150 to 300.

The conventional silica is expected to have an average ultimate particle size, for example, in the range of 0.01 micron to 0.05 micron as determined by the electron micro-scope, although the silica particles can have larger or smaller diameters in some aspects.

Various commercially available silicas may be used, such as silicas commercially available from PPG Industries under the Hi-Sil trademark with designations 210, 243, 315; silicas available from Rhodia, with, for example, designations of Z1165MP and Z165GR; and silicas available from Degussa AG with, for example, designations VN2 and VN3.

In one aspect, the rubber composition can optionally include from 1 phr to 50 phr of carbon black. Commonly employed carbon blacks can be used as a conventional filler. Representative examples of such carbon blacks include NII0, N121, N134, N220, N231, N234, 55 N242, N293, N299, 5315, N326, N330, M332, N339, N343, N347, N351, N358, N375, N539, N550, N582, N630, N642, N650, N683, N754, N762, N765, N774, N787, N907, N908, N990 and N991. These carbon blacks have iodine absorptions ranging from 9 g/kg to 145 g/kg and DBP numbers ranging from 34 cm³/100 g to 150 cm³/100 g.

Other fillers can be used in the rubber composition including, but not limited to, particulate fillers including ultra-high molecular weight polyethylene (UHMWPE), particulate polymer gels, and plasticized starch composite filler.

In some aspects, it may be preferred to have the rubber composition for use in the tire component to additionally contain a conventional sulfur containing organosilicon compound. Examples of suitable sulfur containing organosilicon compounds include, but are not limited to 3,3'-bis(trimethoxysilylpropyl) disulfide, 3,3'-bis (triethoxysilylpropyl) disulfide, 3,3'-bis(triethoxysilylpropyl) tetrasulfide, 3,3'-bis(triethoxysilylpropyl) octasulfide, 3,3'-bis(trimethoxysilylpropyl) tetrasulfide, 2,2'-bis(triethoxysilylethyl) tetrasulfide, 3,3'-bis(trimethoxysilylpropyl) trisulfide, 3,3'-bis(triethoxysily Ipropyl) trisulfide, 3,3'-bis(tributoxysilylpropyl) disulfide, 3,3'-bis(trimethoxysilylpropyl) hexasulfide, 3,3'-bis(trimethoxysilylpropyl) octasulfide, 3,3'-bis(trioctoxysilylpropyl) tetrasulfide, 3,3'-bis(trihexoxysilylpropyl) disulfide, 3,3'-bis(tri-2"-ethylhexoxysilylpropyl) trisulfide, 3,3'-bis(triisooctoxysilylpropyl) tetrasulfide, 3,3'-bis(tri-tbutoxysilylpropyl)disulfide, 2,2'-bis(methoxy diethoxysilylethyl) tetrasulfide, 2,2'-bis(tripropoxysilylethyl) pentasulfide, 3,3'-bis(tricyclonexoxysilylpropyl) tetrasulfide, 3,3'-bis(tricyclopentoxysilylpropyl) trisulfide, 2,2'-bis(tri-2"-methylcyclohexoxysilylethyl) tetrasulfide, bis(trimethoxysilylmethyl) tetrasulfide, 3-methoxyethoxypropoxysilyl 3'-diethoxybutoxysilylpropyltetrasulfide, 2,2'-bis(dimethylmethoxysilylethyl) disulfide, 2,2'-bis(dimethyl sec-butoxysilylethyl) trisulfide, 3,3'-bis(methyl butylethoxysilylpropyl) tetrasulfide, 3,3'-bis(di-t-buty Imethoxysilylpropyl) tetrasulfide, 2,2'-bis(phenylmethylmethoxysilylethyl) trisulfide, 3,3'-bis(diphenylisopropoxysilylpropyl) tetrasulfide, 3,3'-bis(diphenylcyclohexoxysilylpropyl) disulfide, 3,3'-bis(dimethylethylmercaptosilylpropyl) tetrasulfide, 2,2'-bis(methyldimethoxysilylethyl) trisulfide, 2,2'-bis(methylethoxypropoxysilylethyl) tetrasulfide, 3,3'-bis(diethylmethoxysilylpropyl) tetrasulfide, 3,3'-bis(ethyl-di-sec-butoxysilylpropyl) disulfide, 3,3'-bis(propyl diethoxysilylpropyl) disulfide, 3,3'-bis(butyl dimethoxysilylpropyl) trisulfide, 3,3'-bis(phenyldimethoxysilylpropyl) tetrasulfide, 3-phenylethoxybutoxysilyl 3'-trimethoxysilylpropyltetrasulfide, 4,4'-bis(trimethoxysilylbutyl) tetrasulfide, 6,6'bis(triethoxysilylhexyl) tetrasulfide, 12,12'-bis(triisopropoxysilyldodecyl) disulfide, 18,18'-bis(trimethoxysilyloctadecyl) tetrasulfide, 18,18'-bis(tripropoxysilyloctadecenyl) tetrasulfide, 4,4'-bis(trimethoxysilylbuten-2-yl) tetrasulfide, 4,4'-bis(trimethoxysilylcyclohexylene) tetrasulfide, 5,5'-bis(dimethoxymethylsilylpentyl) trisulfide, 3,3'-bis(trimethoxysilyl-2-methylpropyl) tetrasulfide, 3,3'-bis(dimethoxyphenylsilyl-2-methylpropyl) disulfide.

In one aspect, the amount of the sulfur containing organosilicon compound in a rubber composition can vary depending on the level of other additives that are used. Generally speaking, the amount of the compound will range from 0.5 phr to 20 phr, or from 1 phr to 10 phr.

### Preparation of Rubber Compositions and Applications Thereof

It is readily understood by those having skill in the art that the disclosed rubber compositions can be compounded by methods generally known in the rubber compounding art, such as mixing the various sulfur-vulcanizable constituent rubbers with various commonly used additive materials such as, for example, sulfur donors, curing aids, such as activators and retarders, fillers, pigments, fatty acid, zinc oxide, waxes, antioxidants and antiozonants, and peptizing agents. As known to those skilled in the art, depending on the intended use of the sulfur vulcanizable and sulfur-vulcanized material (rubbers), the additives mentioned above are selected and commonly used in conventional amounts.

Representative examples of sulfur donors include elemental sulfur (free sulfur), an amine disulfide, polymeric polysulfide, and sulfur olefin adducts. In one embodiment, the sulfur-vulcanizing agent is elemental sulfur. The sulfur-vulcanizing agent can be used in an amount ranging from 0.5 phr to 8 phr, or from 1.5 phr to 6 phr. Typical amounts of antioxidants can be from 1 phr to 5 phr. Representative antioxidants can be, for example, diphenyl-p-phenylenediamine and others. Typical amounts of antiozonants can be from 1 phr to 5 phr.

Typical amounts of fatty acids, if used, can be from 0.5 phr to 3 phr. In one aspect, useful fatty acids include, but are not limited to, stearic acid. Typical amounts of zinc oxide can be from 2 phr to 5 phr. Typical amounts of waxes can be from 1 phr to 5 phr. Often microcrystalline waxes are used. Typical amounts of peptizers can be from 0.1 phr to 1 phr. Typical peptizers may be, for example, pentachlorothiophenol and dibenzamidodiphenyl disulfide.

In some aspects, accelerators can be used to control the time and/or temperature required for vulcanization and to improve the properties of the vulcanizate. In one embodiment, a single accelerator system can be used, i.e., primary accelerator. The primary accelerator(s) can be used in total amounts ranging from 0.5 phr to 4 phr, or from 0.8 phr to 1.5 phr. In another embodiment, combinations of a primary and a secondary accelerator can be used with the secondary accelerator being used in smaller amounts, such as from 0.05 phr to 3 phr in order to activate and to improve the properties of the vulcanizate. Combinations of these accelerators might be expected to produce a synergistic effect on the final properties and may perform better than those rubbers produced by use of either accelerator alone. In an additional aspect, delayed action accelerators can be used; these are not affected by normal processing temperatures, but produce a satisfactory cure at ordinary vulcanization temperatures.

In some aspects, vulcanization retarders can also be used. Suitable types of accelerators that can be used in the present invention are amines, disulfides, guanidines, thioureas, thiazoles, thi-urams, sulfonamides, dithiocarbamates, and xanthates. In one embodiment, the primary accelerator is a sulfonamide. If a second accelerator is used, the secondary accelerator can be a guanidine, dithiocarbamate, or thiuram compound.

The mixing of the rubber composition can be accomplished by methods known to those having skill in the rubber mixing art. For example, the ingredients are typically mixed in at least two stages, namely, at least one non-productive stage followed by a productive mix stage. The final curatives including sulfur-vulcanizing agents are typically mixed in the final stage, which is conventionally called the "productive" mix stage in which the mixing typically occurs at a temperature, or ultimate temperature, lower than the mix temperature(s) than the preceding non-productive mix stage(s). The terms "non-productive" and "productive" mix stages are well known to those having skill in the rubber mixing art.

In some aspects, the rubber composition can be subjected to a thermomechanical mixing step. The thermomechanical mixing step generally includes a mechanical working in a mixer or extruder for a period of time suitable in order to produce a rubber temperature between 140 °C and 190 °C. The appropriate duration of the thermomechanical working varies as a function of the operating conditions and the volume and nature of the components. For example, the thermomechanical working may be from 1 minute to 20 minutes.

In a further aspect, the rubber composition can be incorporated in a variety of rubber components of a tire. For example, the rubber component can be a tread (including tread cap and tread base), sidewall, apex, chafer, sidewall insert, wirecoat, or innerliner. In one embodiment, the component is a tread. The pneumatic tire of the present invention may be a race tire, passenger tire, aircraft tire, agricultural, earthmover, off-the-road, truck tire, or the like. In one embodiment, the tire is a passenger or truck tire. The tire can also be a radial or bias.

Vulcanization of the disclosed pneumatic tires is generally carried out at conventional temperatures ranging from 100 °C to 200 °C, or from 110 °C to 180 °C. Such tires can be built, shaped, molded and cured by various methods which are known and will be readily apparent to those having skill in such art.

Now having described the aspects of the present disclosure, in general, the following Examples describe some additional aspects of the present disclosure.

### ASPECTS

The present disclosure can be described in accordance with the following numbered Aspects, which should not be confused with the claims.

Aspect 1. An uncured rubber composition comprising a rubber and a functionalized silica, wherein the functionalized silica comprises a plurality of silica particles, a coupling agent, and an alcohol ether having the Formula I:

CH₃-(CH₂)ₙ-(O-(CH₂)ₓ)ₘ-OH Formula I

wherein n is an integer from 1 to 18; wherein x is an integer from 1 to 8; and wherein m is an integer from 1 to 15.

Aspect 2. The uncured rubber composition of aspect 1, wherein x is 2.

Aspect 3. The uncured rubber composition of aspect 1 or 2, wherein n is an integer from 12 to 15.

Aspect 4. The uncured rubber composition of any one of aspects 1-3, wherein m is an integer from 4 to 6.

Aspect 5. The uncured rubber composition of any one of aspects 1-4, wherein the alcohol ether and coupling agent in the composition are at a weight ratio of 1:1 to 1:5.

Aspect 6. The uncured rubber composition of any one of aspects 1-5, wherein the alcohol ether is from 1 part per hundred of the silica particles to 10 parts per hundred of the silica particles.

Aspect 7. The uncured rubber composition of any one of aspects 1-6, wherein the coupling agent comprises an organosilane.

Aspect 8. The uncured rubber composition of any one of aspects 1-6, wherein the coupling agent comprises a bis(trialkoxysilylalkyl) polysulfide, a bis(alkoxyaryloxysilylalkyl) polysulfides, or a bis(triaryloxysilylalkyl) polysulfide.

Aspect 9. The uncured rubber composition of any one of aspects 1-6, wherein the coupling agent has the Formula II 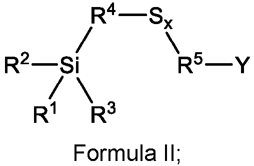 wherein each of R¹, R², and R³ is independently an alkyl group, hydrogen, or an alkoxy group, wherein at least one of R¹, R², and R³ is an alkoxy group; wherein R⁴ and R⁵ are independently a hydrocarbylene group or a bond; wherein x is from 1-12; and wherein Y is selected from an alkoxysilane, an alkylsilane, CN, a vinyl, an amine, an alkylthiol, an alkylamine, a methacrylate, a nitroso, a halogen group, or hydrogen.

Aspect 10. The uncured rubber composition of any one of aspects 1-6, wherein the coupling agent is vinyl triethoxysilane, vinyl-tris-(beta-methoxyethoxy) silane, methacryloylpropyltrimethoxysilane, gamma-amino-propyltriethoxysilane, gamma-mercaptopropyltrimethoxysilane bis(2-triethoxysilyl-ethyl) tetrasulfide, bis(3-trimethoxysilylpropyl) tetrasulfide, bis(2-trimethoxysilyl-ethyl) tetrasulfide, 3-mercaptopropyl-triethoxy silane, 2-mercaptopropyl-trimethoxy silane, 2-mercaptopropyl-triethoxy silane, 3-nitropropyl-trimethoxysilane, 3-nitropropyl-triethoxysilane, 3-chloropropyl-trimethoxysilane, 3-chloropropyl-triethoxysilane, 2-chloropropyl-trimethoxysilane, 2-chloropropyl-triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N dimethylthiocarbamoyl tetrasulfide, 3-trimethoxysilylpropyl-benzothiazole tetrasulfide, 3-triethoxysilylpropyl-benzothiazole tetrasulfide, 3-trimethoxysilylpropyl-methacrylate monosulfide, or 3-trimethoxysilylpropyl-methacrylate monosulfide.

Aspect 11. The uncured rubber composition of any one of aspects 1-10, wherein the coupling agent is from 1 phr to 12 phr.

Aspect 12. The uncured rubber composition of any one of aspects 1-11, wherein the composition comprises 40 phr to 80 phr of silica particles.

Aspect 13. The uncured rubber composition of any one of aspects 1-12, wherein the rubber comprises natural rubber, emulsion styrene butadiene rubber (eSBR), or any combination thereof.

Aspect 14. The uncured rubber composition of any one of aspects 1-12, wherein the rubber is natural rubber.

Aspect 15. A cured rubber composition comprising the uncured rubber composition of any one of aspects 1-14 that has been cured.

Aspect 16. An article comprising the cured rubber composition of aspect 15.

Aspect 17. The article of aspect 16, wherein the article comprises a tire.

Aspect 18. The article of aspect 17, wherein the tire is a truck tire.

Aspect 19. The article of aspect 17 or 18, wherein a tread of the tire comprises the cured rubber composition.

Aspect 20. A functionalized silica comprising a plurality of silica particles, a coupling agent, and an alcohol ether having the Formula I:

CH₃-(CH₂)ₙ-(O-(CH₂)ₓ)ₘ-OH Formula I;

wherein n is an integer from 1 to 18; wherein x is an integer from 1 to 8; and wherein m is an integer from 1 to 15.

Aspect 21. The functionalized silica of aspect 20, wherein x is 2.

Aspect 22. The functionalized silica of aspect 20 or 21, wherein n is an integer from 12 to 15.

Aspect 23. The functionalized silica of any one of aspects 20-22, wherein m is an integer from 4 to 6.

Aspect 24. The functionalized silica of any one of aspects 20-23, wherein the alcohol ether and coupling agent in the composition are at a weight ratio of 1:1 to 1:5.

Aspect 25. The functionalized silica of any one of aspects 20-24, wherein the alcohol ether is from 1 part per hundred of the silica particles to 10 parts per hundred of the silica particles.

Aspect 26. The functionalized silica of any one of aspects 20-25, wherein the coupling agent comprises an organosilane.

Aspect 27. The functionalized silica of any one of aspects 20-26, wherein the coupling agent is from 1 phr to 12 phr.

### EXAMPLES

Unless indicated otherwise, parts are parts by weight, temperature is in °C or is at ambient temperature, and pressure is at or near atmospheric.

### Example 1: Method for Making a Functionalized Silica and a Masterbatch

The functionalized silicas are made by providing an untreated silica. In some experiments, the untreated silica can be provided as a prewashed, wet filter cake of precipitated silica having hydroxyl groups. The untreated silica was diluted in water to form an aqueous slurry. A polyoxyethylene alcohol ether and the coupling agent as described herein are added. In some experiments, the alcohol ether is added first, followed by the coupling agent. In other experiments, the alcohol ether and coupling agent are added at the same time. When the coupling agent was added first, it beaded up in the aqueous solution, so this order of component addition was not further pursued. The temperature of the slurry can be raised above ambient temperature for dispersing the coupling agent and alcohol ether but this is not required. In some experiments, the temperature of the slurry was maintained under 30 °C and mixing was successful. The functionalized silica can be spray dried or dried by other methods known in the art, or can be maintained in an aqueous state for further mixing steps.

When preparing the masterbatch, the aqueous solution of pretreated silica prepared as above is mixed or dispersed in a rubber, such as a natural rubber latex, by high shear mixing. This mixing can be carried out using a high shear mechanical mixer or by pumping the rubber and the aqueous silica slurry through a high shear nozzle. The masterbatch can be dried by any means known in the art.

### Example 2: Masterbatch Compositions, Rubber Compositions, and Preparation

The rubber compositions were prepared by mixing in a Banbury mixer. Initial mixing stages included the natural rubber masterbatch. In the traditional (control) mix, the natural rubber and silica and other rubber compounding ingredients, not including sulfur based rubber cure agents, were mixed in at least one step usually referred to as a "non-productive" mixing stage to an elevated temperature under high shear rubber mixing conditions, followed by a final "productive" mixing step, or stage, in which a sulfur based cure package, such as sulfur and sulfur cure accelerators, was added and mixed therewith at a lower mixing temperature to avoid unnecessarily pre-curing the rubber mixture during the mixing stage.

In exemplary embodiments, the non-productive stage with the masterbatch was mixed until a temperature of 150 °C was reached and then the mix was stopped. For the traditional natural rubber and silica sample, the non-productive stage was mixed until a temperature of 150 °C was reached and then mixing was continued for two more minutes at 150 °C. The productive stage mixing was the same for all compositions, with the rubber mixed to a temperature of 100 °C and then dropped.

Exemplary rubber compositions including masterbatches according to the present disclosure are presented in Table 1. Si69 = coupling agent (3,3'-bis(triethoxysilylpropyl) tetrasulfide); AEO = polyoxyethylene alcohol ether having the formula CH₃-(CH₂)ₙ-(O-(CH₂)ₓ)ₘ-OH where n is an integer from 3 to 18; where x is from 2 to 4; and where m is from 4 to 10. Treatment levels for Si69 and AEO are presented in PHF (parts per hundred filler, e.g. 1 PHF AEO corresponds to 1 g of AEO for every 100 grams of silica).

| **Table 1: Rubber Formulations with Sulfur Adjustments Used** | | | | | | | | | | | | |
|---|---|---|---|---|---|---|---|---|---|---|---|---|
| **Sample** | **Ctrl** | **1** | **2** | **3** | **4** | **5** | **6** | **7** | **8** | **9** | **10** | **11** |
| **AEO (phf)** | | 2 | 2 | 2 | 3 | 3 | 3 | 4 | 4 | 4 | 0 | 6 |
| **Si69 (phf)** | | 3 | 4 | 6 | 3 | 4 | 6 | 3 | 4 | 6 | 6 | 0 |
| **Natural Rubber (phr)** | 100 | | | | | | | | | | | |
| **Precipitated Silica (phr)** | 60 | | | | | | | | | | | |
| **Si69 (phr)** | 6 | | | | | | | | | | | |
| **Carbon Black (phr)** | 5 | 5 | 5 | 5 | 5 | 5 | 5 | 5 | 5 | 5 | 5 | 5 |
| **Wax 1 (phr)** | 1 | 1 | 1 | 1 | 1 | 1 | 1 | 1 | 1 | 1 | 1 | 1 |
| **Wax 2 (phr)** | 2 | 2 | 2 | 2 | 2 | 2 | 2 | 2 | 2 | 2 | 2 | 2 |
| **Antioxidant (phr)** | 2 | 2 | 2 | 2 | 2 | 2 | 2 | 2 | 2 | 2 | 2 | 2 |
| **MB1** | | 165 | | | | | | | | | | |
| **MB2** | | | 166 | | | | | | | | | |
| **MB3** | | | | 170 | | | | | | | | |
| **MB4** | | | | | 166 | | | | | | | |
| **MB5** | | | | | | 167 | | | | | | |
| **MB6** | | | | | | | 169 | | | | | |
| **MB7** | | | | | | | | 167 | | | | |
| **MB8** | | | | | | | | | 168 | | | |
| **MB9** | | | | | | | | | | 170 | | |
| **MB10** | | | | | | | | | | | 166 | |
| **MB11** | | | | | | | | | | | | 166 |
| **Total PHR** | 176 | 175 | 178 | 180 | 176 | 177 | 179 | 177 | 178 | 180 | 176 | 176 |
| **Productive (3^{rd} Stage) PHR** | 176 | 235 | 238 | 240 | 236 | 237 | 239 | 237 | 178 | 180 | 176 | 176 |
| **Zinc Oxide** | 1.75 | 1.75 | 1.75 | 1.75 | 1.75 | 1.75 | 1.75 | 1.75 | 1.75 | 1.75 | 1.75 | 1.75 |
| **Sulfur** | 1.5 | 2.2 | 2.1 | 1.8 | 2.2 | 2.1 | 1.8 | 2.2 | 2.1 | 1.8 | 1.8 | 2.4 |
| **Accelerator** | 2 | 2.5 | 2.4 | 2.2 | 2.5 | 2.4 | 2.2 | 2.5 | 2.4 | 2.2 | 2.2 | 2.6 |
| **Diphenylguanidine** | 1.5 | 1.5 | 15 | 15 | 1.5 | 1.5 | 1.5 | 1.5 | 0.75 | 0.75 | 0.75 | 1.5 |
| **Total PHR** | 182.75 | 242.95 | 245.75 | 247.25 | 243.95 | 244.75 | 246.25 | 244.95 | 185 | 186.5 | 182.5 | 184.25 |
| **4^{th} Stage Specific Gravity** | 1.17 | 1.30 | 1.30 | 1.30 | 1.30 | 1.30 | 1.30 | 1.30 | 1.17 | 1.17 | 1.17 | 1.17 |

The precipitated silica can be any suitable product. In some cases, Zeosil 1165 from Solvay, SA can be used. Wax 1 can be a paraffin wax. Wax 2 can be stearic acid. The antioxidant can be any suitable antioxidant. In some cases, 6-PPD (N1-(4-Methylpentan-2-yl)-N4-phenylbenzene-1,4-diamine) can be used as the antioxidant. The accelerator can be any suitable accelerator. In some cases, CBS (N-cyclohexyl-2-benzothiazole sulfenamide can be used as the accelerator.

The sulfur levels in the compound are adjusted based upon the levels of Si69 used. Si69 is a sulfur donor due to its tetrasulfide structure, so the more Si69 the less sulfur added to the compound. The traditional mix has the highest level of Si69, so the lowest sulfur level.

### Example 3: Properties of the Masterbatches and Rubber Compositions

Rheological properties of the exemplary rubber compositions from Table 1 are shown in Table 2. Data was collected using a moving die rheometer at 150 °C according to ASTM D5289.

| **Table 2: Rheological Properties from Sulfur Adjustment Study** | | | | | | | | | | | | |
|---|---|---|---|---|---|---|---|---|---|---|---|---|
| **Sample** | **Ctrl** | **1** | **2** | **3** | **4** | **5** | **6** | **7** | **8** | **9** | **10** | **11** |
| **AEO (phf)** | | 2 | 2 | 2 | 3 | 3 | 3 | 4 | 4 | 4 | 0 | 6 |
| **Si69 (phf)** | | 3 | 4 | 6 | 3 | 4 | 6 | 3 | 4 | 6 | 6 | 0 |
| **Max Torque (dNm)** | 32.93 | 25.25 | 25.24 | 25.68 | 23.73 | 23.65 | 239 | 20.85 | 22.99 | 22.19 | 27.37 | 25 82 |
| **Min Torque (dNm)** | 4 | 1.85 | 1.93 | 1.99 | 1.76 | 1.79 | 1.74 | 1.75 | 1.64 | 1.82 | 2.18 | 1.9 |
| **Delta Torque (dNm)** | 28.93 | 23.44 | 23.31 | 21.69 | 21.97 | 21.86 | 22.16 | 19.1 | 21.35 | 20.37 | 25.19 | 23 92 |
| **T2 (min)** | 0.31 | 0.52 | 0.47 | 0.42 | 0.56 | 0.59 | 0.44 | 0.58 | 0.56 | 0.45 | 0.4 | 0.24 |
| **T25 (min)** | 2.75 | 1.73 | 1.36 | 1.37 | 1.49 | 1.63 | 1.37 | 1.56 | 1.32 | 1.11 | 1.63 | 1.56 |
| **T90 (min)** | 7.05 | 3.45 | 2.92 | 2.95 | 3.04 | 3.24 | 3.19 | 3.09 | 2.91 | 2.83 | 3.19 | 3.03 |

The minimum torque is a measurement of the uncured viscosity of the uncured rubber. It is seen that the silica masterbatch samples prepared according to the present disclosure all have much lower minimum torque values than the traditionally mixed (control) sample. The lower viscosity is an indication of an easier to process rubber.

The delta torque values are used as an indication of the amount of crosslinking or vulcanization of the rubber. The traditionally mixed (control) sample has a much higher delta torque than the masterbatch samples. This may be due to a phenomenon known as silica flocculation in the compound. The pretreated silica should have better surface coverage which hinders the flocculation.

Rubber process analyzer (RPA) testing was conducted using ASTM D7605. Results are presented in Table 3:

| **Table 3: Rubber Process Analyzer (RPA) Testing** | | | | | | | | | | | | |
|---|---|---|---|---|---|---|---|---|---|---|---|---|
| **Sample** | **Control** | **1** | **2** | **3** | **4** | **5** | **6** | **7** | **8** | **9** | **10** | **11** |
| **Uncured G' at 0.833 Hz (kPa)** | 309.66 | 166.53 | 162.61 | 193.40 | 160.85 | 164.27 | 180.23 | 153.13 | 151.89 | 175.53 | 206.17 | 148.94 |
| **Cured G' at 1% (kPa)** | 3898.47 | 2479.45 | 2513.00 | 2408.97 | 2180.65 | 2147.28 | 2123.52 | 1921.53 | 1814.73 | 1884.66 | 2798.04 | 2320.66 |
| **Cured G' at 10% (kPa)** | 2745.78 | 1774.88 | 1845.85 | 1872.99 | 1702.33 | 1677.79 | 1750.59 | 1485.19 | 1472.19 | 1582.71 | 1970.64 | 1595.99 |
| **Cured G' at 50% (kPa)** | 1529.71 | 1111.03 | 1176.75 | 1228.85 | 1154.41 | 1130.83 | 1214.95 | 990.96 | 1023.52 | 1110.01 | 1152.05 | 890.46 |
| **Tan δ at 10%** | 0.12 | 0.13 | 0.12 | 0.10 | 0.10 | 0.10 | 0.08 | 0.11 | 0.09 | 0.08 | 0.15 | 0.14 |

For RPA tests, he uncured data shown is the G' (storage or elastic modulus) at 100 °C. All of the silica masterbatch samples have a lower uncured G' than the control; again this is an indication of a better or easier to process rubber compound.

The cured RPA properties shown include the G' at 1% strain and at 10% strain. The G' at 1% strain can be an indicator of filler dispersion, so the lower the value the better dispersion. However, this value is convoluted with polymer-filler interaction. Improved polymer filler interaction will raise the G' at 1%.

The G' at 10% strain is measurement of the cured stiffness of the rubber. The values for the masterbatch are lower than the control but the masterbatch samples with the higher (6 PHF) Si69 values have higher values.

The tan δ at 10% strain values from the RPA are also shown. The tan d is the loss modulus G" divided by the storage modulus G' and is a measurement of the hysteresis of the rubber compound, where hysteresis is an indicator of the compound rolling resistance or the fuel economy of the tire containing the compound. The masterbatch samples with the highest levels of Si69 (6PHF) all show much lower tan δ values than the traditionally mixed (control) sample and lower than tan δ the other masterbatch samples. It is important to note that the masterbatch samples with either Si69 alone or the AEO alone have significantly higher tan δ values that the other samples. Therefore, a combination of the AEO and 6 PHF Si69 gives a better overall combination of properties.

Tensile properties of the rubbers were evaluated using ASTM D412 and DIN abrasion was evaluated according to ASTM D5963. Results for these tests are shown in Table 4:

| **Table 4: Tensile and Abrasion Testing** | | | | | | | | | | | | |
|---|---|---|---|---|---|---|---|---|---|---|---|---|
| **Sample** | **Ctrl** | **1** | **2** | **3** | **4** | **5** | **6** | **7** | **6** | **9** | **10** | **11** |
| **Mod at 100% (MPa)** | 4.1 | 2.5 | 2.9 | 3.2 | 2.5 | 2.5 | 2.9 | 2.1 | 2.1 | 2.5 | 2.7 | 1.5 |
| **Mod at 300% (MPa)** | 16.4 | 12.3 | 14.2 | 16.4 | 12.7 | 12.5 | 15.2 | 10.4 | 10.4 | 13.5 | 12.7 | 4.9 |
| **Tensile Stress at Max (MPa)** | 29.4 | 27.2 | 26.6 | 26.5 | 25.6 | 26.4 | 27.3 | 27.2 | 24.9 | 27.3 | 27.2 | 23.3 |
| **Tensile Strain at Max (%)** | 464.4 | 534.0 | 453.5 | 442.1 | 505.5 | 522.8 | 469.4 | 580.0 | 541.5 | 501.7 | 525.3 | 679.1 |
| **Energy at Max (J)** | 23.1 | 21.6 | 19.8 | 18.3 | 19.2 | 20.6 | 19.7 | 22.9 | 19.5 | 20.5 | 22.2 | 19.4 |
| **DIN Abrasion** | 100.0 | 111 | 109 | 93 | 98 | 91 | 91 | 99 | 110 | 117 | 178 | 115 |

The tensile strain values for the masterbatch samples are all higher than the traditional mixed (control) sample; this can be an indicator of dispersion, but it is convoluted with other parameters. DIN abrasion values are indexed versus the traditionally mixed (control) sample.

In this instance, the lower the value the better the abrasion resistance, which is an indicator of tread wear for the compound. In this data the masterbatch sample with 4 PHF AEO and 6 PHF Si69 gives the best abrasion resistance.

## Claims

1. An uncured rubber composition comprising a rubber and a functionalized silica, wherein the functionalized silica comprises a plurality of silica particles, a coupling agent, and an alcohol ether having the Formula I:
CH₃-(CH₂)ₙ-(O-(CH₂)ₓ)ₘ-OH Formula I
wherein n is an integer from 1 to 18; wherein x is an integer from 1 to 8; and wherein m is an integer from 1 to 15.

2. The uncured rubber composition of claim 1, wherein the coupling agent comprises a bis(trialkoxysilylalkyl) polysulfide, a bis(alkoxyaryloxysilylalkyl) polysulfide, or a bis(triaryloxy-silylalkyl) polysulfide.

3. The uncured rubber composition of claim 1, wherein the coupling agent has the Formula II: 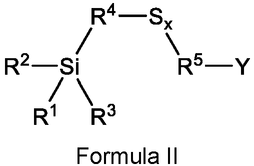 wherein each of R¹, R², and R³ is independently an alkyl group, hydrogen, or an alkoxy group, wherein at least one of R¹, R², and R³ is an alkoxy group; wherein R⁴ and R⁵ are independently a hydrocarbylene group or a bond; wherein x is from 1-12; and wherein Y is selected from an alkoxysilane, an alkylsilane, CN, a vinyl, an amine, an alkylthiol, an alkylamine, a methacrylate, a nitroso, a halogen group, or hydrogen.

4. The uncured rubber composition of at least one of the previous claims, wherein the coupling agent is vinyl triethoxysilane, allyltriethoxysilane, vinyl-tris-(beta-methoxyethoxy) silane, methacryloylpropyltrimethoxysilane, gamma-amino-propyltriethoxysilane, gamma-mercaptopropyltrimethoxysilane *bis*(2-triethoxysilyl-ethyl) tetrasulfide, *bis*(3-trimethoxysilylpropyl) tetrasulfide, *bis*(2-trimethoxysilyl-ethyl) tetrasulfide, 3-mercaptopropyl-triethoxy silane, 2-mercaptopropyl-trimethoxy silane, 2-mercaptopropyl-triethoxy silane, 3-nitropropyl-trimethoxysilane, 3-nitropropyl-triethoxysilane, 3-chloropropyl-trimethoxysilane, 3-chloropropyl-triethoxysilane, 2-chloropropyl-trimethoxysilane, 2-chloropropyl-triethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilyl-N,N dimethylthiocarbamoyl tetrasulfide, 3-trimethoxysilylpropyl-benzothiazole tetrasulfide, 3-triethoxysilylpropyl-benzothiazole tetrasulfide, 3-trimethoxysilylpropyl-methacrylate monosulfide, or 3-trimethoxysilylpropyl-methacrylate monosulfide.

5. The uncured rubber composition of at least one of the previous claims wherein the rubber comprises natural rubber, emulsion styrene butadiene rubber (eSBR), or any combination thereof or wherein the rubber is natural rubber.

6. The uncured rubber composition of at least one of the previous claims, wherein the alcohol ether and coupling agent in the composition are at a weight ratio of 1:1 to 1:5.

7. The uncured rubber composition of at least one of the previous claims, wherein the alcohol ether is from 1 part per hundred of the silica particles to 10 parts per hundred of the silica particles; and/or wherein the coupling agent is from 1 part per hundred of the silica particles to 20 parts per hundred of the silica particles.

8. The uncured rubber composition of at least one of the previous claims, wherein the composition comprises 40 phr to 80 phr of silica particles.

9. A cured rubber composition comprising the uncured rubber composition of at least one of the previous claims that has been cured.

10. An article comprising the cured rubber composition of claim 9.

11. The article of claim 10, wherein the article is a tire or a truck tire, the tire or truck tire preferably comprising the cured rubber composition in its tread.

12. A functionalized silica comprising a plurality of silica particles, a coupling agent, and an alcohol ether having the Formula I:
CH₃-(CH₂)ₙ-(O-(CH₂)ₓ)ₘ-OH Formula I
wherein n is an integer from 1 to 18; wherein x is an integer from 1 to 8; and wherein m is an integer from 1 to 10.

13. The functionalized silica of claim 12, wherein the alcohol ether and coupling agent in the composition are at a weight ratio of 1:1 to 1:5.

14. The functionalized silica of claim 12 or 13 wherein the alcohol ether is from 1 part per hundred of the silica particles to 10 parts per hundred of the silica particles; and/or wherein the coupling agent is from 1 part per hundred of the silica particles to 20 parts per hundred of the silica particles.

15. The functionalized silica of at least one of the claims 12 to 14, wherein the coupling agent comprises an organosilane.
